(19) Europäisches Patentamt
European Patent Office
Office européen des brevets

(11) **EP 4 678 775 A1**

(12) **EUROPEAN PATENT APPLICATION**
published in accordance with Art. 153(4) EPC

(43) Date of publication:
**14.01.2026 Bulletin 2026/03**

(21) Application number: 24766848.6

(22) Date of filing: **19.02.2024**

(51) International Patent Classification (IPC):
*C22C 38/00* (2006.01)     *B60R 21/268* (2011.01)
*C21D 8/10* (2006.01)     *C21D 9/08* (2006.01)
*C22C 38/54* (2006.01)

(52) Cooperative Patent Classification (CPC):
**B60R 21/268; C21D 8/10; C21D 9/08; C22C 38/00;
C22C 38/54**

(86) International application number:
**PCT/JP2024/005810**

(87) International publication number:
**WO 2024/185477 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.03.2023 JP 2023036923**

(71) Applicant: NIPPON STEEL CORPORATION
Chiyoda-ku
Tokyo 100-8071 (JP)

(72) Inventors:
• **AOKI, Kosuke**
**Tokyo 100-8071 (JP)**
• **NAKAMURA, Hirofumi**
**Tokyo 100-8071 (JP)**

(74) Representative: **Zimmermann & Partner
Patentanwälte mbB
Postfach 330 920
80069 München (DE)**

(54) **SEAMLESS STEEL PIPE AND INFLATOR BOTTLE FOR AIRBAGS**

(57) The seamless steel pipe has a chemical composition described in the specification, and the chemical composition satisfies [WT/ (5C + Mo + Cr) ≥ 1.00] in conjunction with a wall thickness WT (mm), and satisfies [GN - 1.51 × (Mn + 85P - 30Ca) ≥ 8.50] in conjunction with a prior-y grain size number GN. The seamless steel pipe has a tensile strength of 1000 MPa or more, an elongation after fracture is 8.0% or more, and a critical hydrogen concentration of 2.5 ppm or more.

EP 4 678 775 A1

# EP 4 678 775 A1

**Description**

TECHNICAL FIELD

The present invention relates to a seamless steel pipe and an inflator bottle for an airbag.

BACKGROUND ART

The automotive industry has been actively introducing safety-oriented equipment. In particular, airbag systems have been installed, which inflate an airbag with gas or the like between an occupant and a steering wheel, an instrument panel, or the like at the time of a collision before the occupant impacts these objects, so as to absorb the kinetic energy of the occupant, thus reducing injuries of the occupant. Although airbag systems of a type that uses an explosive chemical have been adopted to date, a system that uses high-pressure fill gas has been developed from the viewpoint of environmental recyclability, and the system is increasingly applied.

In the system, gas or the like to blow into an airbag at the time of a collision is always kept at high pressure, and at the time of a collision, the gas blows all at once. Accordingly, a stress is to be loaded to a pipe used for an airbag at a high strain rate in an extremely short time. Therefore, a pipe to be used for the airbag is required to have excellent strength and resistance to burst.

Recently, there are increasing demands for weight reduction of automobiles. From this viewpoint, there is also a demand for a decreased wall thickness and weight of a pipe for an onboard airbag. To keep a high bursting pressure even in a thin-wall airbag, inflator bottles produced from high-strength seamless steel pipes having a tensile strength of 900 MPa or more have become used in airbag systems.

Further, a steel pipe for the airbag is required to have excellent workability of diameter reduction because the steel pipe is subjected to diameter reduction process when an inflator bottle or the like is produced.

In view of these circumstances, for example, Patent Documents 1 and 2 disclose a seamless steel pipe for an airbag. According to Patent Documents 1 and 2, increase in strength, and improvements in toughness and workability are studied.

LIST OF PRIOR ART DOCUMENTS

PATENT DOCUMENT

Patent Document 1: JP2004-27303A
Patent Document 2: JP2004-76034A

SUMMARY OF INVENTION

TECHNICAL PROBLEM

However, in order to maintain higher reliability of a steel pipe for an airbag, restraint of embrittlement by hydrogen entering a steel pipe during a production step and in a usage environment is required. Patent Documents 1 and 2 do not consider hydrogen cmbrittlement resistance properties of the steel pipe.

An objective of the present invention is to provide a seamless steel pipe and an inflator bottle for an airbag that have high strength and excellent workability of diameter reduction and further has excellent hydrogen embrittlement resistance properties.

SOLUTION TO PROBLEM

The present invention is made to solve the above problems and has a gist of the following seamless steel pipe and inflator bottle for airbag.

(1) A seamless steel pipe having a chemical composition consisting of, in mass%:

C: 0.05 to 0.20%,
Si: 0.05 to 0.50%,

Mn: 0.30 to 1.50%,
P: 0.025% or less,
S: 0.020% or less,
Cu: 0.01 to 0.50%,
Ni: 0.01 to 0.50%,
Cr: 0.01 to 1.20%,
Mo: 0.01 to 0.50%,
Ti: 0.001 to 0.050%,
Nb: 0.001 to 0.100%,
Ca: 0.0005 to 0.0025%,
Al: 0.080% or less,
N: 0.0100% or less,
V: 0 to 0.100%,
B: 0 to 0.0050%,
Mg: 0 to 0.0050%,
REM: 0 to 0.0050%,
Sn: 0 to 0.100%, and
As: 0 to 0.010%,
with the balance: Fe and impurities, wherein
on a precondition that contents fall within respective ranges described above,
the chemical composition satisfies Formula (i) shown below in conjunction with a wall thickness of the seamless steel pipe and
the chemical composition further satisfies Formula (ii) shown below in conjunction with a prior-austenite grain size number of the seamless steel pipe, and wherein
a tensile strength of the seamless steel pipe is 1000 MPa or more,
an elongation after fracture of the seamless steel pipe is 8.0% or more, and a critical hydrogen concentration of the seamless steel pipe is 2.5 ppm or more:

$$WT / (5C + Mo + Cr) \geq 1.00 \quad \cdots(i)$$

$$GN - 1.51 \times (Mn + 85P - 30Ca) \geq 8.50 \quad \cdots(ii)$$

where symbols of elements in the formula mean contents (mass%) of the elements in the steel, and when an element is not contained, zero will be set to the corresponding symbol, and where WT means the wall thickness (mm) of the seamless steel pipe and GN means the prior-austenite grain size number of the seamless steel pipe.

(2) The seamless steel pipe according to (1), wherein the chemical composition contains one or more elements selected from, in mass%:

V: 0.001 to 0.100%,
B: 0.0001 to 0.0050%,
Mg: 0.0001 to 0.0100%,
REM: 0.0001 to 0.0100%,
Sn: 0.001 to 0.100%, and
As: 0.001 to 0.010%.

(3) An inflator bottle for an airbag including a cylindrical portion extending in one direction and a diameter-reduced portion formed on at least one end of the cylindrical portion in the one direction, wherein
a chemical composition of the cylindrical portion consists of, in mass%:

C: 0.05 to 0.20%,
Si: 0.05 to 0.50%,
Mn: 0.30 to 1.50%,
P: 0.025% or less,
S: 0.020% or less,
Cu: 0.01 to 0.50%,
Ni: 0.01 to 0.50%,

Cr: 0.01 to 1.20%,
Mo: 0.01 to 0.50%,
Ti: 0.001 to 0.050%,
Nb: 0.001 to 0.100%,
Ca: 0.0005 to 0.0025%,
Al: 0.080% or less,
N: 0.0100% or less,
V: 0 to 0.100%,
B: 0 to 0.0050%,
Mg: 0 to 0.0050%,
REM: 0 to 0.0050%,
Sn: 0 to 0.100%, and
As: 0 to 0.010%,
with the balance: Fe and impurities, wherein
on a precondition that contents fall within respective ranges described above,
the chemical composition of the cylindrical portion satisfies Formula (i) shown below in conjunction with a wall thickness of the cylindrical portion and
the chemical composition of the cylindrical portion further satisfies Formula (ii) shown below in conjunction with a prior-austenite grain size number of the cylindrical portion, and wherein
a tensile strength of the cylindrical portion is 1000 MPa or more,
an elongation after fracture of the cylindrical portion is 8.0% or more, and
a critical hydrogen concentration of the cylindrical portion is 2.5 ppm or more:

$$WT / (5C + Mo + Cr) \geq 1.00 \quad \cdots(i)$$

$$GN - 1.51 \times (Mn + 85P - 30Ca) \geq 8.50 \quad \cdots(ii)$$

where symbols of elements in the formula mean contents (mass%) of the elements in the steel of the cylindrical portion, and when an element is not contained, zero will be set to the corresponding symbol, and where WT means the wall thickness (mm) of the cylindrical portion and GN means the prior-austenite grain size number of the cylindrical portion.

(4) The inflator bottle for an airbag according to (3), wherein the chemical composition of the cylindrical portion contains one or more elements selected from, in mass%:

V: 0.001 to 0.100%,
B: 0.0001 to 0.0050%,
Mg: 0.0001 to 0.0100%,
REM: 0.0001 to 0.0100%,
Sn: 0.001 to 0.100%, and
As: 0.001 to 0.010%.

ADVANTAGEOUS EFFECT OF INVENTION

According to the present invention, a seamless steel pipe and an inflator bottle for an airbag that have high strength and excellent workability of diameter reduction and further has excellent hydrogen embrittlement resistance properties can be provided.

BRIEF DESCRIPTION OF DRAWINGS

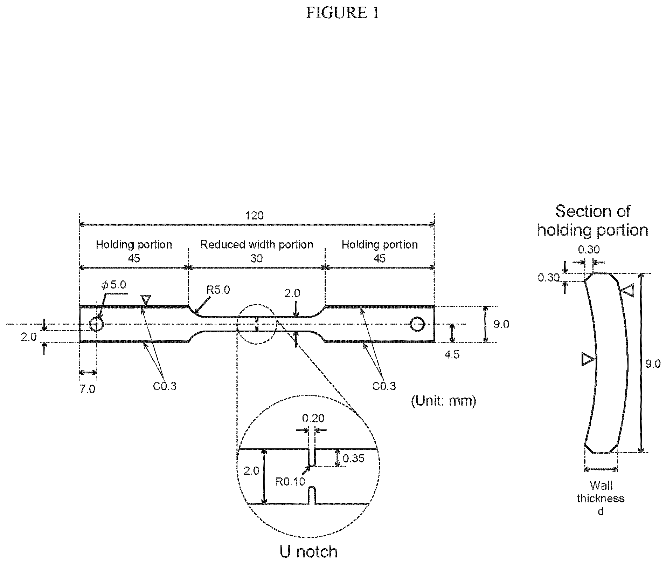

[Figure 1] Figure 1 is a diagram for describing a shape of an arc-shaped tensile test specimen used for measurement of critical hydrogen concentration.

DESCRIPTION OF EMBODIMENTS

The present inventors conducted diligent studies about a method for both increasing strength and improving workability of diameter reduction of a seamless steel pipe and further keeping hydrogen embrittlement resistance properties. As a result, the present inventors obtained the following findings.

(a) To achieve increase in strength of a seamless steel pipe, contents of elements that enhance hardenability need to be increased. In particular, keeping sufficient contents of C, Mo, and Cr is effective. However, if the contents of these elements are excessive with respect to a wall thickness of the seamless steel pipe, workability of diameter reduction cannot be ensured. From such a viewpoint, it is important to control the balance between the chemical composition and wall thickness of seamless steel pipes, and specifically, Formula (i) shown below has to be satisfied.

$$WT / (5C + Mo + Cr) \geq 1.00 \quad \cdots (i)$$

(b) In addition, in order to ensure workability of diameter reduction, it is important to improve ductility, and specifically, an elongation after fracture of the seamless steel pipe needs to be 8.0% or more. In addition to controlling the chemical composition, it is possible to achieve the above elongation after fracture by producing the seamless steel pipe under appropriate conditions.

(c) If the content of Mn is excessive, a diffusion velocity of hydrogen is decreased, which causes not only localized concentration of hydrogen but also production of MnS, leading to degradation in hydrogen embrittlement resistance properties. In addition, P segregates in grain boundaries to degrade hydrogen embrittlement resistance properties. In contrast, Ca has the effect of restraining the production of MnS and thus enhances hydrogen embrittlement resistance properties.

(d) Studies by the present inventors revealed that a degree of degradation in hydrogen embrittlement resistance properties varies based on a prior-austenite grain size number. The present inventors evaluated an influence of contents of Mn, P, and Ca and the prior-austenite grain size number GN on hydrogen embrittlement resistance properties and consequently found that excellent hydrogen embrittlement resistance propertics can be obtained by adjusting the content of each clement within the specified range and satisfying Formula (ii) shown below.

$$GN - 1.51 \times (Mn + 85P - 30Ca) \geq 8.50 \quad \cdots (ii)$$

(e) Furthermore, in order to improve hydrogen embrittlement resistance properties, it is necessary to perform preheating in a tempering process. The mechanism by which the hydrogen embrittlement resistance properties is further improved by preheating has not been clarified, but it is considered that this is because the temperature distribution in the thickness direction is eliminated and the metallographic structure becomes uniform.

The present invention has been made based on the above findings. Requirements of the present invention will be described below in detail.

(A) Chemical Composition

Reasons for limiting a chemical composition of a seamless steel pipe according to an embodiment of the present invention are as follows. In the following description, the symbol "%" for a content of each element means "mass%".

C: 0.05 to 0.20%

C (carbon) is an element that is effective in increasing strength of steel inexpensively. If a content of C is less than 0.05%, it is difficult to provide a desired tensile strength, and if the content of C is more than 0.20%, workability and weldability are decreased. Therefore, the content of C is set to 0.05 to 0.20%. A range of the content of C is preferably 0.06% or more to 0.18% or less, and more preferably 0.07% or more to 0.17% or less. When a workability of diameter reduction is particularly important, the C content is more preferably less than 0.17%.

Si: 0.05 to 0.50%

Si (silicon) is an clement that has a deoxidation action and increases hardenability of steel to enhance strength of steel. For this purpose, a content of Si is set to 0.05% or more. However, if the content of Si is more than 0.50%, toughness is decreased. Therefore, the content of Si is set to 0.50% or less. A range of the content of Si is preferably 0.10% or more to 0.40% or less, and more preferably 0.15% or more to 0.30% or less.

Mn: 0.30 to 1.50%

Mn (manganese) is an element that has a deoxidation action and is effective in increasing hardenability of steel to enhance strength and toughness of steel. However, if a content of Mn is less than 0.30%, sufficient strength and toughness cannot be provided. On the other hand, if the content of Mn is more than 1.50%, coarsening of MnS occurs, and coarsened MnS elongates and expands at the time of hot rolling, resulting in decrease in toughness and hydrogen embrittlement resistance properties. Further, excessive Mn decreases a diffusion velocity of hydrogen, which causes localized concentration of hydrogen, leading to decrease in hydrogen embrittlement resistance properties. For this reason, the content of Mn is set to 0.30 to 1.50%. A range of the content of Mn is preferably 0.40% or more to 1.20% or less, and more preferably 0.50% or more to 1.00% or less.

P: 0.025% or less

P (phosphorus) is contained in steel as an impurity and leads to decrease in toughness and hydrogen embrittlement resistance properties due to grain-boundary segregation. In particular, if a content of P is more than 0.025%, the decrease in toughness and hydrogen embrittlement resistance properties becomes significant. Therefore, the content of P is set to 0.025% or less. The content of P is preferably 0.020% or less, and more preferably 0.015% or less.

S: 0.020% or less

S (sulfur) is contained in steel as an impurity and decreases toughness particularly in a T direction of a pipe (a direction perpendicular to a pipe axis direction of the pipe). If a content of S is more than 0.020%, the decrease in toughness in the T direction of a pipe becomes significant. Therefore, the content of S is set to 0.020% or less. The content of S is preferably 0.010% or less.

Cu: 0.01 to 0.50%

Cu (copper) increases hardenability of steel to enhance strength and toughness of the steel. The effect appears when 0.01% or more of Cu is contained. However, a content of Cu more than 0.50% leads to increase in alloy cost. Therefore, the content of Cu is set to 0.01 to 0.50%. The content of Cu is preferably 0.05% or more, more preferably 0.10% or more, and further preferably 0.20% or more. The content of Cu is preferably 0.40% or less, and more preferably 0.35% or less.

Ni: 0.01 to 0.50%

Ni (nickel) increases hardenability of steel, thereby enhancing strength and toughness of the steel. The effect appears when 0.01% or more of Ni is contained. However, a content of Ni more than 0.50% leads to increase in alloy cost. Therefore, the content of Ni is set to 0.01 to 0.50%. The content of Ni is preferably 0.05% or more, more preferably 0.10% or more, and further preferably 0.20% or more. The content of Ni is preferably 0.45% or less, and more preferably 0.40% or less.

Cr: 0.01 to 1.20%

Cr (chromium) increases hardenability of steel and increases temper softening resistance to enhance strength and toughness. The effect appears when 0.01% or more of Cr is contained. However, a content of Cr more than 1.20% leads to increase in alloy cost. Therefore, the content of Cr is set to 0.01 to 1.20%. The content of Cr is preferably 0.05% or more, more preferably 0.10% or more, and further preferably 0.20% or more. The content of Cr is preferably 1.00% or less, and more preferably 0.90% or less.

Mo: 0.01 to 0.50%

Mo (molybdenum) increases hardenability of steel and increases temper softening resistance to enhance strength and toughness. The effect appears when 0.01% or more of Mo is contained. However, a content of Mo more than 0.50% leads to increase in alloy cost. If the content of Mo is excessively high, a resultant seamless steel pipe tends to increase in strength even in air cooling after hot rolling, which requires softening heat treatment before cold drawing work, leading to increase in production cost. Therefore, the content of Mo is set to 0.01 to 0.50%. The content of Mo is preferably 0.05% or more, more preferably 0.10% or more, and further preferably 0.20% or more. The content of Mo is preferably 0.45% or less, and more preferably 0.40% or less.

Ti: 0.001 to 0.050%

Ti (titanium) fixes N in steel, enhancing toughness. In addition, Ti nitrides finely dispersed strongly pin grain boundaries to subject grains to grain refinement, enhancing toughness of steel. To provide the effect, 0.001% or more of Ti needs to be contained. However, if more than 0.050% of Ti is contained, its nitrides are coarsened, rather decreasing toughness. Therefore, a content of Ti is set to 0.001 to 0.050%. The content of Ti is preferably 0.003% or more, more preferably 0.005% or more, and further preferably 0.010% or more. The content of Ti is preferably 0.045% or less, more preferably 0.040% or less, and further preferably 0.030% or less.

Nb: 0.001 to 0.100%

Nb (niobium) is finely dispersed in steel in the form of its carbides, strongly pinning crystal grain boundaries. Nb has the effect of subjecting grains to grain refinement, enhancing toughness of steel. To provide the effect, 0.001% or more of Nb needs to be contained. However, if more than 0.100% of Nb is contained, its carbides are coarsened, rather decreasing toughness. Therefore, a content of Nb is set to 0.001 to 0.100%. The content of Nb is preferably 0.005% or more, more preferably 0.010% or more, and further preferably 0.015% or more. The content of Nb is preferably 0.080% or less, and more preferably 0.060% or less.

Ca: 0.0005 to 0.0025%

Ca (calcium) fixes S that is present in steel as an unavoidable impurity in the form of its sulfide and improves anisotropy of toughness to increase toughness in a T direction of a pipe, thereby increasing resistance to burst. In addition, Ca restrains production of MnS, thus contributing to enhancement in hydrogen embrittlement resistance properties. The effect appears when 0.0005% or more of Ca is contained. However, if more than 0.0025% of Ca is contained, inclusions increase, rather decreasing toughness. Therefore, a content of Ca is set to 0.0005 to 0.0025%. In order to reliably obtain the effect of improving hydrogen embrittlement resistance properties, the Ca content is preferably 0.0010% or more, more preferably more than 0.0010%, further preferably 0.0012% or more, and further preferably 0.0015% or more.

Al: 0.080% or less

Al (aluminum) is an clement that has a deoxidation action and is effective in increasing toughness and workability. However, if more than 0.080% of Al is contained, occurrence of macro-streak-flaw becomes significant. Therefore, a content of Al is set to 0.080% or less. The content of Al is preferably 0.060% or less, and more preferably 0.040% or less. The content of Al may be on the level of impurity. Thus, a lower limit of the content of Al is not limited to a particular content. However, the content of Al is preferably set to 0.005% or more. The content of Al in the present invention refers to a content of acid-soluble Al (what is called sol. Al).

N: 0.0100% or less

N (nitrogen) forms fine nitrides, thereby strongly pinning grain boundaries to subject grains to grain refinement, thus enhancing toughness of steel. However, if more than 0.0100% of N is contained, nitrides are coarsened, rather decreasing toughness. Therefore, a content of N is set to 0.0100% or less. The content of N is preferably 0.0080% or less, and more preferably 0.0050% or less. The content of N may be on the level of impurity. Thus, a lower limit of the content of N is not limited to a particular content. However, the content of N is preferably set to 0.0005% or more, and more preferably 0.0010% or more.

V: 0 to 0.100%

V (vanadium) is an element that keeps toughness and increases strength through precipitation strengthening. Thus, V may be contained as necessary. However, more than 0.100% of V contained leads to decrease in toughness. Therefore, in a case where V is contained, a content of V is set to 0.100% or less. The content of V is preferably 0.050% or less, and more preferably 0.010% or less. Even a trace quantity of V enables the action of V to be recognized. However, to provide the effect sufficiently, 0.001% or more of V is preferably contained.

B: 0 to 0.0050%

B (boron) is an element that segregates in grain boundaries in steel to enhance hardenability of steel significantly. Therefore, B may be contained as necessary. However, if more than 0.0050% of B is contained, there is a tendency for borides to precipitate coarsely in crystal grain boundaries, decreasing toughness. Therefore, in a case where B is contained, a content of B is set to 0.0050% or less. The content of B is preferably 0.0030% or less, and more preferably 0.0020% or less. Even a trace quantity of B enables the action of B to be recognized. However, to keep the effect sufficiently, 0.0001% or more of B is preferably contained, and 0.0005% or more of B is more preferably contained.

Mg: 0 to 0.0050%

As with Ca, Mg (magnesium) is an element that fixes S present in steel as an unavoidable impurity in the form of its sulfide and improves anisotropy of toughness to increase toughness in a T direction of a pipe, thereby increasing resistance to burst. Therefore, Mg may be contained as necessary. However, if more than 0.0050% of Mg is contained, inclusions increase, rather decreasing toughness. Therefore, in a case where Mg is contained, a content of Mg is set to 0.0050% or less. The content of Mg is preferably 0.0040% or less, and more preferably 0.0030% or less. Even a trace quantity of Mg enables the action of Mg to be recognized. However, to keep the effect sufficiently, 0.0001% or more of Mg is preferably contained, and 0.0005% or more of Mg is more preferably contained.

REM: 0 to 0.0050%

As with Ca, REM (rare earth metal) is one or more elements that fix S present in steel as an unavoidable impurity in the form of their sulfides and improve anisotropy of toughness to increase toughness in a T direction of a pipe, thereby increasing resistance to burst. Therefore, REM may be contained as necessary. However, if more than 0.0050% of REM is contained, inclusions increase, rather decreasing toughness. Therefore, in a case where REM is contained, a content of REM is set to 0.0050% or less. The content of REM is preferably 0.0040% or less, and more preferably 0.0030% or less. Even a trace quantity of REM enables the action of REM to be recognized. However, to keep the effect sufficiently, 0.0001% or more of REM is preferably contained, and 0.0005% or more of REM is more preferably contained.

In the present embodiment, "REM" refers to Sc (scandium), Y (yttrium), and lanthanoids, 17 elements in total, and in a case where REM includes one element, "the content of REM" refers to a content of the element, and in a case where REM includes two or more elements, "the content of REM" refers to a total content of the elements. In general, REM is supplied in the form of misch metal, which is an alloy of a plurality of types of REM. For this reason, REM may be contained in such a manner as to add one, or two or more separate elements of REM or may be added, for example, in the form of misch metal.

Sn: 0 to 0.100%

Sn (tin) has an effect of increasing corrosion resistance. Thus, it may be contained as necessary. However, if Sn is contained excessively, it will lead to a decrease in toughness. Therefore, a content of Sn is set to 0.100% or less. The content of Sn is preferably 0.080% or less, and more preferably 0.060% or less. Even a trace quantity of Sn enables the action of Sn to be recognized. However, to keep the effect sufficiently, 0.001% or more of Sn is preferably contained, and 0.003% or more of Sn is more preferably contained.

As: 0 to 0.010%

As (arsenic) has an effect of increasing corrosion resistance. Thus, it may be contained as necessary. However, if As is contained excessively, it will lead to a decrease in hot workability. Therefore, a content of As is set to 0.010% or less. The content of As is preferably 0.008% or less, and more preferably 0.006% or less. Even a trace quantity of As enables the action of As to be recognized. However, to keep the effect sufficiently, 0.001% or more of As is preferably contained, and 0.002% or more of As is more preferably contained.

The seamless steel pipe according to the present embodiment contains the elements described above, with the balance being Fe and impurities. The term "impurities" herein means components that are mixed in a steel material in producing the steel material industrially from raw materials such as ores and scraps and due to various factors in the producing process, and are allowed to be mixed in the steel material within their respective ranges in which the impurities have no adverse effect on the present invention.

The chemical composition of the seamless steel pipe according to the present embodiment satisfies Formula (i) shown below in conjunction with a wall thickness on the precondition that the contents of elements fall within their respective ranges described above. As described above, keeping sufficient contents of C, Mo, and Cr enhances hardenability, thus enabling the achievement of increase in strength of the seamless steel pipe. However, from the viewpoint of workability of diameter reduction, the balance between the chemical composition and wall thickness of the seamless steel pipe needs to be adjusted. The workability of diameter reduction can be obtained by satisfying Formula (i) shown below. The left side value of the Formula (i) below is preferably 1.20 or more, more preferably 1.50 or more, and further preferably 2.00 or more.

$$WT / (5C + Mo + Cr) \geq 1.00 \quad \cdots(i)$$

where symbols of elements in the formula mean contents (mass%) of the elements in the steel, and when an element is not contained, zero will be set to the corresponding symbol, and where WT means the wall thickness (mm) of the seamless steel pipe.

The chemical composition of the seamless steel pipe according to the present embodiment satisfies Formula (ii) shown below in conjunction with a prior-austenite grain size number on the precondition that the contents of elements fall within their respective ranges described above. By adjusting the contents of Mn and P, which degrades hydrogen embrittlement resistance properties, and the content of Ca, which enhances hydrogen embrittlement resistance properties, based on the prior-austenite grain size number, excellent hydrogen embrittlement resistance properties can be provided. The left side value of Formula (ii) below is preferably 9.00 or more, more preferably 9.50 or more, and further preferably 10.00 or more.

$$GN - 1.51 \times (Mn + 85P - 30Ca) \geq 8.50 \quad \cdots(ii)$$

where symbols of elements in the formula mean contents (mass%) of the elements in the steel, and when an element is not contained, zero will be set to the corresponding symbol, and where GN means the prior-austenite grain size number of the seamless steel pipe.

The prior-austenite grain size number is measured in conformance with ASTM E112 (2013). Specifically, a specimen including the entire wall thickness of the seamless steel pipe is taken such that a surface of the seamless steel pipe including a pipe axis direction and a wall-thickness direction of the seamless steel pipe (hereinafter, referred to as a "longitudinal section") serves as a test surface (hereinafter, referred to as an "observation surface"), and the observation surface is subjected to mirror polish. After the polish, prior-austenite crystal grain boundaries in the observation surface are made to appear with picral etchant.

Subsequently, five visual fields in the observation surface are observed under an optical microscope with a 1/4 position of the wall thickness from an outer surface of the seamless steel pipe being centered in each visual field. In each visual field, a prior-austenite grain size number is determined by the comparison procedure specified in ASTM E112 (2013), and the average value of the visual fields is taken as a prior-austenite grain size number of the seamless steel pipe. At this time, a base observation magnification is set to x100, and an observation magnification is set to x200 or x400 in accordance with the grain size number. When the observation magnification is set to x200 or x400, correction is made in conformance with ASTM E112 (2013) using a correction factor Q defined by Formula (I) shown below.

$$Q = 6.64\log_{10}(M/100) \quad \cdots(I)$$

where M in the formula denotes the observation magnification.

Note that the prior-austenite grain size number is not limited to a particular number as long as the prior-austenite grain size number satisfies Formula (ii) described above. For example, the prior-austenite grain size number can be set to 10.0 or more or 11.0 or more.

(B) Wall Thickness

The wall thickness of the seamless steel pipe according to the present embodiment is not limited to a particular wall thickness as long as the wall thickness satisfies Formula (i) described above. For example, the wall thickness can be set to 1.00 mm or more, or 1.50 mm or more. On the other hand, from the viewpoint of weight reduction, the wall thickness is preferably thin. The wall thickness is preferably 2.60 mm or less, more preferably less than 2.50 mm, and further preferably 2.40 mm or less. In general, the thinner the wall, the more difficult it is to conduct diameter reduction process. However, in the present invention, by adjusting the balance between the chemical composition and the wall thickness of the seamless steel pipe, the workability of diameter reduction can be obtained even in the case of a thin wall.

(C) Properties

The scamless steel pipe according to the present embodiment has high strength. Specifically, its tensile strength is 1000 MPa or more. When the tensile strength is 1000 MPa or more, the seamless steel pipe exerts excellent resistance to burst even in a case where the seamless steel pipe is used as an inflator bottle for an airbag to which a stress is loaded at a high strain rate in an extremely short time.

As described above, note that to achieve increase in strength of a scamless steel pipe, contents of elements that enhance hardenability need to be further increased. As a result, a risk for decreasing workability of diameter reduction will increase. When focusing on a workability of diameter reduction, the tensile strength is preferably less than 1200 MPa.

The seamless steel pipe according to the present embodiment has excellent ductility to keep the workability of diameter reduction. Specifically, an elongation after fracture is 8.0% or more. The elongation after fracture is preferably 9.0% or more, and more preferably 10.0% or more.

The tensile strength and the elongation after fracture are measured in conformance with JIS Z 2241: 2011. Specifically, a tubular test specimen having a certain length is cut from the seamless steel pipe and fabricated into a No. 11 test coupon specified in JIS Z 2241: 2011. Subsequently, the tubular tensile test specified in JIS Z 2241: 2011 is performed on the No. 11 test coupon to measure the tensile strength and the elongation after fracture.

Moreover, the seamless steel pipe according to the present embodiment has excellent hydrogen embrittlement resistance properties. Specifically, a critical hydrogen concentration is 2.5 ppm or more. This makes it possible to ensure high reliability when used as a steel pipe for an air bag or the like. The critical hydrogen concentration is more preferably 2.7 ppm or more. Specifically, in the present embodiment, the critical hydrogen concentration is determined by the following method.

A plurality of arc-shaped tensile test specimens having a shape illustrated in Figure 1 is taken from the seamless steel pipe. The arc-shaped tensile test specimen is made by cutting an arc-shaped test specimen with a length of 120 mm, a width of 9.0 mm, and a thickness of the original wall thickness d of the steel pipe from the seamless steel pipe, thereafter, providing a reduced width portion in the central part of the arc-shaped test specimen in the longitudinal direction, while holding portions are left at both ends of the arc-shaped test specimen in the longitudinal direction, and further providing a U notch in the central part of the reduced width portion in the longitudinal direction. Each of the holding portions has a length of 45 mm and a width of 9.0 mm, and the reduced width portion has a length of 30 mm and a width of 2.0 mm. Both ends of the reduced width portion have curved surfaces having a radius of curvature of 5.0 mm and are connected to the holding portions. Further, the U notch has notch width of 0.20 mm, notch depth of 0.35 mm, and notch bottom radius of 0.10 mm.

Subsequently, the cathode charge constant load test with a potential within the range of -0.9 to -1.2 V is performed with the arc-shaped tensile test specimens being immersed in various types of aqueous solutions containing 3% NaCl and ammonium thiocyanate within the range of 0 to 30 g/L. At this time, a stress that is 90% of tensile strength of each seamless steel pipe is loaded.

Then, only arc-shaped tensile test specimens that resulted in endurance times of more than 200 hours are stored in liquid nitrogen, and their parallel parts of the reduced width portions are cut to make test specimens for hydrogen concentration measurement. Thereafter, the test specimens are subjected to measurement of hydrogen concentration by a thermal desorption analysis method. In the thermal desorption analysis method, hydrogen concentrations of the specimens are determined by heating the test specimens for hydrogen concentration measurement from normal temperature to 200°C at a heating rate of 100°C/hour and measuring their amounts of desorbed hydrogen. The highest value of the resultant concentrations of hydrogen is determined as a critical hydrogen concentration.

(D) Inflator Bottle for Airbag

An inflator bottle for an airbag according to an embodiment of the present invention includes a cylindrical portion extending in one direction and a diameter-reduced portion formed on at least one end of the cylindrical portion in the one direction. The diameter-reduced portion may be formed on both ends of the cylindrical portion in the one direction.

The inflator bottle for an air bag according to the present embodiment is produced by cutting the above-described seamless steel pipe into a predetermined length, and then performing a diameter reduction process on one end or both ends thereof. Therefore, the chemical composition, the prior austenite grain size, the wall thickness, and the properties of the cylindrical portion are the same as the seamless steel pipe that is the raw material. Therefore, the explanation will be omitted.

Regarding the diameter-reduced portion, the strength and the wall thickness are equal to or greater than those of the seamless steel pipe that is the raw material due to the diameter reduction process. In other words, if the seamless steel pipe that is the raw material has high strength and excellent hydrogen embrittlement resistance properties, then the inflator bottle for an airbag produced from the seamless steel pipe will also have high strength and excellent hydrogen embrittlement resistance properties.

(E) Production Method

The seamless steel pipe according to an embodiment of the present invention can be produced by the following method.

A steel having the chemical composition described as in (A) is melted by a normal method and then cast into ingots or cast pieces. Note that the steel may be formed into cast pieces for pipe-making having a round billet shape by what is called a "round continuous casting" method.

As the next step, the cast ingots or cast pieces are subjected to blooming or hot forging. This step is a step for producing starting materials used for final hot rolling (e.g., pipe-making by piercing, rolling, and elongating steps performed as hot processing, or pipe-making by hot extrusion press). The cast pieces made to have the round billet shape by the "round continuous casting" can be directly finished into seamless steel pipes. Therefore, the blooming or the hot forging is not necessarily performed.

The starting materials to be used for final hot rolling produced by the blooming or the hot forging described above or the cast pieces made to have the round billet shape (hereinafter, these will be collectively referred to as "cast pieces") are subjected to a hot rolling step, a cold working step, a quenching step, and a tempering step in this order, by which seamless steel pipes in the present embodiment are produced.

<Hot Rolling Step>

The cast pieces are heated and then subjected to the hot rolling, by which hollow shells having a prescribed shape are produced. As a method for the hot rolling, a normal method for hot rolling is to be used. For example, the Mandrel-Mannesmann process may be used. A heating temperature of the cast pieces can be set to, for example, 1000 to 1300°C.

<Cold Working Step>

The hollow shells provided by the method described above are subjected to cold working for enhancement of dimensional accuracy. A method for the cold working is not limited to a particular method as long as the method enables the hollow shells to be processed evenly. For example, use of what is called a cold draw bench, which is provided with a holed die and a plug, a cold rolling machine called a cold Pilger mill, or the like is industrially advantageous.

<Quenching Step>

The hollow shells after the cold working are next subjected to an induction hardening process in which the hollow shells are subjected to high-frequency induction heating to a temperature of 900 to 1050°C and to rapid cooling. A heating temperature of the high-frequency induction heating of less than 900°C may cause incompletion of austenitization, failing to impart high strength. On the other hand, a heating temperature of the high-frequency induction heating of more than 1050°C causes austenitic grains to coarsen through rapid growth, failing to impart excellent toughness.

Rapid heating by the high-frequency induction heating restrains growth of austenitic grains, thus providing a fine metal micro-structure. From the viewpoint of restraining the growth of austenitic grains, a holding time at the heating temperature is preferably set to 10 seconds or less, which however depends on a size of the hollow shells. Note that the heating temperature refers to a temperature at outer surfaces of the hollow shells. As the rapid cooling, any appropriate method such as water cooling and oil cooling may be used as long as the method can provide a sufficient quenching structure.

<Tempering Step>

The hollow shells subjected to the induction hardening are subjected to a tempering process in which the hollow shells are heated to 370 to 410°C and then cooled to room temperature. When a heating temperature of the tempering is less than 370°C, strength can be kept but ductility and low-temperature toughness are decreased. In particular, when ductility is decreased, sufficient workability of diameter reduction cannot be kept, even if Formula (i) described above is satisfied. On the other hand, when a heating temperature of the tempering is more than 410°C, excellent ductility and low-temperature toughness can be obtained but strength is decreased, failing to provide a tensile strength of 1000 MPa or more.

A holding time at the heating temperature is preferably set to 10 to 30 minutes, which however depends on the size of the hollow shells. The heating temperature refers to a temperature at the outer surfaces of the hollow shells. A cooling rate for the tempering is not limited to a particular cooling rate. Accordingly, cooling in accordance with facilities such as allowing cooling in the air, forced air cooling, mist cooling, oil cooling, and water cooling is to be performed.

Moreover, in order to obtain excellent hydrogen embrittlement resistance properties, it is necessary to perform preheating before the temperature is raised to the above heating temperature. Specifically, preheating is performed so that the residence time in the temperature range of 250 to 350°C is 5 minutes or longer. As described above, it is considered that this is because the temperature distribution in the thickness direction is eliminated and the metallographic structure becomes uniform by performing preheating.

Further, as described above, the inflator bottle for an air bag according to the present embodiment is produced by cutting the seamless steel pipe produced by the above-described method into a predetermined length, and then performing a diameter reduction process on one end or both ends thereof. Cut and diameter reduction process can be performed by known methods.

The present invention will be described below more specifically with reference to examples, but the present invention is not limited to these examples.

EXAMPLE

Steels having chemical compositions shown in Table 1-1 and Table 1-2 were melted and cast into rectangular billets by a converter-continuous casting process. The rectangular billets were further formed into round billets by hot forging and cooled to room temperature.

[Table 1-1]

Table 1-1

| Steel | Chemical Composition (mass%, balance: Fe and impurities) | | | | | | | | | | |
|---|---|---|---|---|---|---|---|---|---|---|---|
| | C | Si | Mn | P | S | Cu | Ni | Cr | Mo | Ti | Nb |
| A | 0.15 | 0.21 | 0.55 | 0.008 | 0.002 | 0.30 | 0.31 | 0.75 | 0.31 | 0.007 | 0.007 |
| B | 0.16 | 0.22 | 0.95 | 0.018 | 0.014 | 0.32 | 0.30 | 0.77 | 0.32 | 0.009 | 0.020 |
| C | 0.15 | 0.24 | 0.85 | 0.023 | 0.002 | 0.30 | 0.31 | 0.75 | 0.32 | 0.009 | 0.091 |
| D | 0.15 | 0.24 | 1.47 | 0.007 | 0.002 | 0.31 | 0.32 | 0.85 | 0.12 | 0.009 | 0.012 |
| E | 0.14 | 0.24 | 0.51 | 0.007 | 0.002 | 0.31 | 0.32 | 0.70 | 0.30 | 0.009 | 0.022 |
| F | 0.12 | 0.26 | 0.57 | 0.005 | 0.002 | 0.34 | 0.37 | 0.60 | 0.35 | 0.024 | 0.021 |
| G | 0.12 | 0.34 | 1.10 | 0.008 | 0.018 | 0.30 | 0.30 | 0.55 | 0.33 | 0.007 | 0.079 |
| H | 0.11 | 0.08 | 0.61 | 0.007 | 0.001 | 0.17 | 0.19 | 0.46 | 0.27 | 0.044 | 0.022 |
| I | 0.10 | 0.15 | 0.55 | 0.006 | 0.012 | 0.30 | 0.33 | 0.17 | 0.40 | 0.009 | 0.020 |
| J | 0.12 | 0.47 | 0.57 | 0.004 | 0.004 | 0.33 | 0.30 | 0.70 | 0.30 | 0.009 | 0.021 |
| K | 0.16 | 0.14 | 0.49 | 0.005 | 0.005 | 0.35 | 0.34 | 0.86 | 0.38 | 0.004 | 0.017 |
| L | 0.14 | 0.25 | 0.67 | 0.010 | 0.010 | 0.28 | 0.25 | 0.58 | 0.22 | 0.004 | 0.056 |
| M | 0.12 | 0.22 | 0.65 | 0.009 | 0.005 | 0.25 | 0.20 | 0.79 | 0.35 | 0.008 | 0.046 |
| N | 0.15 | 0.25 | 0.51 | 0.009 | 0.002 | 0.26 | 0.25 | 0.31 | 0.01 | 0.024 | 0.025 |
| O | 0.11 | 0.29 | 1.05 | 0.008 | 0.003 | 0.01 | 0.01 | 0.30 | 0.01 | 0.026 | 0.024 |
| P | 0.12 | 0.23 | 0.46 | 0.006 | 0.005 | 0.25 | 0.21 | 0.21 | 0.01 | 0.015 | 0.020 |
| Q | 0.13 | 0.24 | 0.49 | 0.006 | 0.004 | 0.26 | 0.30 | 0.27 | 0.02 | 0.011 | 0.015 |
| R | 0.10 | 0.29 | 1.00 | 0.008 | 0.003 | 0.02 | 0.02 | 0.29 | 0.01 | 0.026 | 0.024 |
| S | 0.10 | 0.29 | 0.90 | 0.008 | 0.003 | 0.01 | 0.01 | 0.24 | 0.01 | 0.026 | 0.024 |
| T | 0.13 | 0.24 | 0.65 | 0.006 | 0.004 | 0.26 | 0.30 | 0.25 | 0.01 | 0.011 | 0.015 |
| U | 0.09 | 0.29 | 1.05 | 0.008 | 0.003 | 0.02 | 0.02 | 0.30 | 0.01 | 0.026 | 0.024 |
| V | 0.08 | 0.23 | 1.10 | 0.010 | 0.007 | 0.01 | 0.01 | 0.20 | 0.01 | 0.020 | 0.020 |
| W | 0.17 | 0.24 | 0.95 | 0.006 | 0.004 | 0.40 | 0.41 | 0.45 | 0.44 | 0.011 | 0.012 |
| X | 0.16 | 0.20 | 0.90 | 0.006 | 0.004 | 0.25 | 0.26 | 0.40 | 0.39 | 0.022 | 0.010 |
| Y | 0.16 | 0.29 | 1.00 | 0.002 | 0.002 | 0.04 | 0.35 | 0.49 | 0.35 | 0.012 | 0.030 |
| Z | 0.11 | 0.15 | 0.94 | 0.005 | 0.003 | 0.35 | 0.18 | 0.90 | 0.30 | 0.005 | 0.020 |
| AA | 0.18 | 0.20 | 1.04 | 0.009 | 0.008 | 0.40 | 0.36 | 1.12 | 0.48 | 0.009 | 0.029 |
| AB | 0.15 | 0.11 | 0.95 | 0.015 | 0.011 | 0.29 | 0.10 | 1.05 | 0.46 | 0.025 | 0.035 |
| AC | 0.18 | 0.32 | 0.85 | 0.020 | 0.015 | 0.10 | 0.20 | 0.90 | 0.55 | 0.035 | 0.080 |
| AD | 0.14 | 0.20 | 0.71 | 0.022 | 0.007 | 0.21 | 0.21 | 0.32 | 0.20 | 0.015 | 0.020 |
| AE | 0.13 | 0.24 | 0.70 | 0.023 | 0.006 | 0.19 | 0.15 | 0.27 | 0.23 | 0.011 | 0.021 |
| AF | 0.15 | 0.19 | 0.81 | 0.020 | 0.012 | 0.15 | 0.25 | 0.35 | 0.22 | 0.015 | 0.020 |
| AG | 0.13 | 0.21 | 0.70 | 0.015 | 0.001 | 0.35 | 0.25 | 0.65 | 0.38 | 0.037 | 0.007 |
| AH | 0.14 | 0.30 | 0.85 | 0.018 | 0.008 | 0.20 | 0.21 | 0.24 | 0.02 | 0.021 | 0.012 |
| AI | 0.11 | 0.25 | 0.99 | 0.010 | 0.011 | 0.10 | 0.25 | 0.85 | 0.12 | 0.033 | 0.005 |
| AJ | 0.10 | 0.35 | 1.05 | 0.021 | 0.004 | 0.25 | 0.30 | 0.55 | 0.25 | 0.014 | 0.011 |
| AK | 0.14 | 0.28 | 0.60 | 0.011 | 0.008 | 0.40 | 0.35 | 0.81 | 0.27 | 0.009 | 0.010 |
| AL | 0.13 | 0.27 | 0.55 | 0.017 | 0.015 | 0.36 | 0.30 | 0.67 | 0.22 | 0.018 | 0.020 |
| AM | 0.16 | 0.14 | 1.05 | 0.005 | 0.005 | 0.15 | 0.14 | 0.74 | 0.25 | 0.004 | 0.004 |
| AN | 0.13 | 0.22 | 0.41 | 0.010 | 0.009 | 0.30 | 0.25 | 0.22 | 0.05 | 0.025 | 0.044 |
| AO | 0.10 | 0.34 | 1.00 | 0.018 | 0.015 | 0.01 | 0.02 | 0.35 | 0.02 | 0.009 | 0.008 |
| AP | 0.09 | 0.20 | 1.10 | 0.007 | 0.008 | 0.02 | 0.01 | 0.22 | 0.01 | 0.015 | 0.041 |
| AQ | 0.16 | 0.23 | 0.50 | 0.010 | 0.008 | 0.31 | 0.32 | 0.76 | 0.30 | 0.009 | 0.010 |
| AR | 0.15 | 0.24 | 0.55 | 0.011 | 0.008 | 0.28 | 0.30 | 0.73 | 0.30 | 0.008 | 0.011 |

[Table 1-2]

Table 1-2

| Steel | Chemical Composition (mass%, balance: Fe and impurities) | | | | | | | | |
|---|---|---|---|---|---|---|---|---|---|
| | Ca | Al | N | V | B | Mg | REM | Sn | As |
| A | 0.0018 | 0.036 | 0.0026 | - | - | - | - | - | - |
| B | 0.0015 | 0.036 | 0.0026 | - | - | - | - | - | - |
| C | 0.0015 | 0.036 | 0.0027 | 0.002 | - | - | - | - | - |
| D | 0.0018 | 0.032 | 0.0012 | - | 0.0010 | - | - | - | - |
| E | 0.0018 | 0.036 | 0.0030 | 0.040 | 0.0030 | - | - | - | - |
| F | 0.0017 | 0.030 | 0.0091 | - | - | 0.0010 | 0.0010 | - | - |
| G | 0.0010 | 0.031 | 0.0030 | 0.051 | - | 0.0024 | 0.0020 | - | - |
| H | 0.0018 | 0.036 | 0.0027 | 0.002 | 0.0047 | 0.0045 | - | - | - |
| I | 0.0015 | 0.035 | 0.0054 | 0.092 | - | - | 0.0046 | - | - |
| J | 0.0023 | 0.035 | 0.0025 | - | - | - | - | - | - |
| K | 0.0011 | 0.025 | 0.0014 | 0.005 | - | - | - | 0.001 | 0.002 |
| L | 0.0014 | 0.038 | 0.0010 | - | 0.0015 | 0.0044 | - | - | 0.004 |
| M | 0.0019 | 0.029 | 0.0025 | - | - | - | - | 0.038 | 0.003 |
| N | 0.0015 | 0.032 | 0.0039 | - | 0.0013 | - | - | 0.051 | - |
| O | 0.0012 | 0.031 | 0.0034 | - | 0.0012 | - | - | 0.049 | - |
| P | 0.0021 | 0.031 | 0.0052 | - | 0.0015 | - | - | - | - |
| Q | 0.0018 | 0.028 | 0.0050 | - | 0.0014 | - | - | - | - |
| R | 0.0012 | 0.031 | 0.0035 | - | 0.0012 | - | - | - | - |
| S | 0.0012 | 0.031 | 0.0035 | - | 0.0014 | - | - | 0.045 | - |
| T | 0.0018 | 0.028 | 0.0050 | - | 0.0014 | - | - | - | - |
| U | 0.0012 | 0.031 | 0.0035 | - | 0.0012 | - | - | 0.049 | - |
| V | 0.0008 | 0.020 | 0.0018 | - | - | - | - | - | - |
| W | 0.0018 | 0.028 | 0.0050 | - | - | - | - | - | - |
| X | 0.0022 | 0.020 | 0.0070 | - | 0.0011 | - | - | - | - |
| Y | 0.0011 | 0.025 | 0.0055 | - | 0.0017 | - | - | 0.004 | 0.002 |
| Z | 0.0011 | 0.022 | 0.0013 | 0.055 | 0.0010 | - | - | - | - |
| AA | 0.0021 | 0.035 | 0.0022 | 0.021 | 0.0014 | - | - | - | - |
| AB | 0.0008 | 0.038 | 0.0010 | 0.020 | 0.0010 | - | - | - | - |
| AC | 0.0015 | 0.040 | 0.0090 | 0.050 | - | - | - | - | - |
| AD | 0.0007 | 0.031 | 0.0011 | - | - | - | - | - | - |
| AE | 0.0006 | 0.034 | 0.0010 | - | - | - | - | - | - |
| AF | 0.0005 | 0.031 | 0.0010 | - | - | - | - | - | - |
| AG | 0.0015 | 0.020 | 0.0023 | 0.089 | - | - | - | - | - |
| AH | 0.0010 | 0.040 | 0.0021 | - | - | - | - | - | - |
| AI | 0.0040 | 0.020 | 0.0040 | 0.098 | - | - | - | - | - |
| AJ | 0.0011 | 0.034 | 0.0010 | 0.055 | - | - | - | - | - |
| AK | 0.0019 | 0.029 | 0.0016 | 0.051 | - | - | - | - | - |
| AL | 0.0011 | 0.033 | 0.0012 | 0.010 | 0.0014 | 0.0020 | - | - | - |
| AM | 0.0009 | 0.024 | 0.0075 | 0.002 | - | 0.0030 | 0.0020 | - | - |
| AN | 0.0021 | 0.020 | 0.0020 | 0.003 | - | - | 0.0022 | - | 0.005 |
| AO | 0.0024 | 0.015 | 0.0019 | 0.002 | 0.0017 | - | - | - | - |
| AP | 0.0010 | 0.025 | 0.0011 | - | 0.0011 | - | - | - | - |
| AQ | 0.0011 | 0.033 | 0.0012 | - | - | - | - | - | - |
| AR | 0.0019 | 0.029 | 0.0010 | 0.005 | - | - | - | - | - |

The round billets were heated, hot-rolled into hollow shells by the Mandrel-Mannesmann process, and cooled to room temperature. The resultant hollow shells were subjected to cold working with a cold draw bench, so as to obtain pipes having the diameter and the wall thickness shown in Table 2. Subsequently, quenching and tempering were performed under conditions shown in Table 2 to produce seamless steel pipes. The preheating time in Table 2 means the residence time in the temperature range of 250 to 350°C. Note that the quenching was performed in such a manner as to subject all the hollow shells to high-frequency induction heating and then water quenching at a cooling rate adjusted to 150°C/sec. As the cooling for the tempering, all the hollow shells were subjected to allowing cooling in the air.

[Table 2]

Table 2

| Test No. | Steel | Dimensions of steel pipe | | Quenching Step | | Tempering Step | | |
|---|---|---|---|---|---|---|---|---|
| | | Outer diameter OD (mm) | Wall thickness WT (mm) | Heating temperature (°C) | Holding time (s) | Preheating time (min) | Heating temperature (°C) | Holding time (s) |
| 1 | A | 30.0 | 1.85 | 950 | 5 | 5 | 370 | 20 |
| 2 | B | 30.0 | 1.95 | 945 | 4 | 5 | 370 | 20 |
| 3 | C | 30.0 | 1.85 | 950 | 3 | 5 | 370 | 20 |
| 4 | D | 30.0 | 1.85 | 970 | 5 | 5 | 370 | 20 |
| 5 | E | 30.0 | 1.85 | 950 | 2 | 5 | 370 | 20 |
| 6 | F | 30.0 | 1.85 | 920 | 5 | 5 | 370 | 20 |
| 7 | G | 30.0 | 1.85 | 1000 | 3 | 5 | 390 | 20 |
| 8 | H | 30.0 | 1.85 | 930 | 2 | 7 | 400 | 20 |
| 9 | I | 30.0 | 1.85 | 980 | 3 | 7 | 410 | 20 |
| 10 | J | 30.0 | 1.85 | 1045 | 5 | 7 | 410 | 20 |
| 11 | K | 35.0 | 2.20 | 950 | 5 | 7 | 390 | 20 |
| 12 | L | 35.0 | 2.20 | 950 | 5 | 7 | 390 | 20 |
| 13 | M | 35.0 | 2.20 | 950 | 5 | 7 | 390 | 20 |
| 14 | N | 30.0 | 2.35 | 960 | 4 | 7 | 400 | 20 |
| 15 | O | 30.0 | 2.20 | 960 | 4 | 7 | 400 | 20 |
| 16 | P | 35.0 | 2.55 | 970 | 4 | 10 | 410 | 20 |
| 17 | Q | 25.0 | 2.00 | 950 | 4 | 10 | 410 | 20 |
| 18 | R | 30.0 | 2.05 | 970 | 4 | 10 | 410 | 20 |
| 19 | S | 20.0 | 1.90 | 950 | 4 | 12 | 380 | 20 |
| 20 | T | 25.0 | 1.85 | 970 | 4 | 12 | 380 | 20 |
| 21 | U | 35.0 | 2.38 | 970 | 4 | 10 | 410 | 20 |
| 22 | V | 25.0 | 2.00 | 960 | 5 | 7 | 380 | 20 |
| 23 | W | 20.0 | 1.50 | 970 | 5 | 7 | 400 | 20 |
| 24 | X | 20.0 | 1.50 | 970 | 3 | 7 | 400 | 20 |
| 25 | Y | 20.5 | 1.55 | 970 | 3 | 7 | 400 | 20 |
| 26 | Z | 20.5 | 1.55 | 970 | 3 | 7 | 370 | 20 |
| 27 | AA | 35.0 | 2.30 | 970 | 3 | 7 | 370 | 20 |
| 28 | AB | 35.0 | 2.20 | 970 | 3 | 7 | 370 | 20 |
| 29 | AC | 35.0 | 2.20 | 970 | 3 | 7 | 370 | 20 |
| 30 | AD | 30.0 | 1.85 | 950 | 5 | 7 | 370 | 20 |
| 31 | AE | 30.0 | 1.85 | 960 | 2 | 7 | 390 | 20 |
| 32 | AF | 30.0 | 1.85 | 950 | 5 | 7 | 370 | 20 |
| 33 | AG | 30.0 | 1.85 | 1020 | 5 | 7 | 370 | 20 |
| 34 | AH | 35.0 | 2.50 | 950 | 5 | 7 | 380 | 20 |
| 35 | AI | 35.0 | 2.50 | 950 | 5 | 7 | 380 | 20 |
| 36 | AJ | 35.0 | 2.50 | 950 | 5 | 7 | 380 | 20 |
| 37 | AK | 30.0 | 1.85 | 950 | 5 | 3 | 370 | 20 |
| 38 | AL | 30.0 | 1.85 | 950 | 5 | 1 | 370 | 20 |
| 39 | AM | 30.0 | 1.85 | 950 | 5 | 1 | 370 | 20 |
| 40 | AN | 35.0 | 2.55 | 950 | 5 | 3 | 400 | 20 |
| 41 | AO | 25.0 | 2.00 | 950 | 5 | 3 | 400 | 20 |
| 42 | AP | 30.0 | 2.05 | 950 | 5 | 1 | 400 | 20 |
| 43 | AQ | 30.0 | 1.85 | 950 | 5 | 5 | 350 | 20 |
| 44 | AR | 30.0 | 1.85 | 950 | 5 | 5 | 360 | 20 |

The resultant seamless steel pipes were first subjected to measurement of prior-austenite grain size number. The prior-austenite grain size number was measured in conformance with ASTM E112 (2013). Specifically, a specimen including the entire wall thickness of each seamless steel pipe was taken such that a longitudinal section of the seamless steel pipe serves as an observation surface, and the observation surface was subjected to mirror polish. After the polish, prior-austenite crystal grain boundaries in the observation surface were made to appear with picral etchant. Subsequently, five visual fields in the observation surface were observed under an optical microscope with a 1/4 position of the wall thickness from an outer surface of the scamless steel pipe being centered in each visual field. In each visual field, a prior-austenite grain size number was determined by the comparison procedure specified in ASTM E112 (2013), and the average value of the visual fields was taken as a prior-austenite grain size number of the seamless steel pipe. At this time, a base observation magnification was set to x100, and an observation magnification was set to x200 or x400 in accordance with the grain size number. When the observation magnification was set to x200 or x400, correction was made in conformance with ASTM E112 (2013) using a correction factor Q defined by Formula (I) shown below.

$$Q = 6.64\log_{10}(M/100) \quad \cdots(I)$$

where M in the formula denotes the observation magnification.

Subsequently, each seamless steel pipe was evaluated in terms of mechanical properties, workability of diameter reduction, and hydrogen embrittlement resistance properties by the following methods.

<Mechanical Properties>

A tubular test specimen having a certain length is cut from each seamless steel pipe and fabricated into a No. 11 test coupon specified in JIS Z 2241: 2011. Subsequently, the tubular tensile test specified in JIS Z 2241: 2011 was performed on the No. 11 test coupon to measure the tensile strength TS, the yield strength YS, and elongation after fracture EL.

<Workability of Diameter Reduction>

After cutting out two tubular specimens with a length of 300 mm from each seamless steel pipe, one end of each tubular specimen was subject to diameter reduction process under conditions such that the working degree was 0.60 and 0.50 to form a diameter-reduced portion with a length of 30 mm. Here, the working degree in the diameter reduction process is a value obtained by dividing the outer diameter of the diameter-reduced portion by the outer diameter of the seamless steel pipe before the diameter reduction process. Thereafter, the presence or absence of cracks in the diameter-reduced portion was observed.

When no cracks were generated under both conditions of the working degree of 0.60 and 0.50, it was determined that the workability of diameter reduction was extremely excellent (EX). Further, when cracks were generated under the condition of the working degree of 0.50, but no cracks were generated under the condition of the working degree of 0.60, it was determined that the workability of diameter reduction was excellent (G). On the other hand, when cracks were generated under both conditions of the working degrees of 0.60 and 0.50, it was determined that the workability of diameter reduction was poor (NA).

<Hydrogen Embrittlement Resistance Properties>

An arc-shaped tensile test specimen having a shape illustrated in Figure 1 was taken from each seamless steel pipe and subjected to a cathode charge constant load test. Specifically, the cathode charge constant load test with a potential within the range of - 0.9 to -1.2 V was performed with a plurality of arc-shaped tensile test specimens with holding portions and reduced width portions being immersed in various types of aqueous solutions containing 3% NaCl and ammonium thiocyanate within the range of 0 to 30 g/L. At this time, a stress that was 90% of tensile strength of each seamless steel pipe was loaded.

Then, only specimens that resulted in endurance times of more than 200 hours were stored in liquid nitrogen, and their parallel parts of the reduced width portions were cut and subjected to measurement of hydrogen concentration by a thermal desorption analysis method. In the thermal desorption analysis method, hydrogen concentrations of the specimens were determined by heating the specimens from normal temperature to 200°C at a heating rate of 100°C/hour and measuring their amounts of desorbed hydrogen. A highest value of the resultant concentrations of hydrogen was determined as a critical hydrogen concentration (He) and taken as an index of hydrogen embrittlement resistance properties. In the present example, a case where He was 2.5 ppm or more was determined to be excellent in hydrogen embrittlement resistance properties.

Results of the evaluation are collectively shown in Table 3.

[Table 3]

Table 3

| Test No. | Steel | Prior-γ grain size number GN | Left side value of Formula (i) | Left side value of Formula (ii) | Mechanical properties | | | | Evaluation result | | |
|---|---|---|---|---|---|---|---|---|---|---|---|
| | | | | | TS (MPa) | YS (MPa) | EL (%) | TS·EL (MPa·%) | workability of diameter reduction | Critical hydrogen content Hc (ppm) | |
| 1 | A | 12.1 | 1.02 | 10.32 | 1281 | 1130 | 11.0 | 14091 | G | 3.1 | Inventive example |
| 2 | B | 12.5 | 1.03 | 8.82 | 1285 | 1083 | 10.2 | 13107 | G | 2.9 | |
| 3 | C | 12.9 | 1.02 | 8.73 | 1275 | 1112 | 8.3 | 10583 | G | 2.7 | |
| 4 | D | 12.0 | 1.08 | 8.96 | 1265 | 1130 | 11.0 | 13915 | G | 2.6 | |
| 5 | E | 12.4 | 1.09 | 10.81 | 1272 | 1092 | 9.4 | 11957 | G | 3.0 | |
| 6 | F | 12.5 | 1.19 | 11.07 | 1265 | 1140 | 8.5 | 10753 | G | 3.1 | |
| 7 | G | 11.5 | 1.25 | 8.86 | 1255 | 1083 | 10.2 | 12801 | G | 2.8 | |
| 8 | H | 11.8 | 1.45 | 10.06 | 1247 | 1134 | 10.4 | 12969 | G | 3.0 | |
| 9 | I | 11.1 | 1.73 | 9.57 | 1225 | 1090 | 9.6 | 11760 | G | 3.0 | |
| 10 | J | 10.4 | 1.16 | 9.13 | 1257 | 1130 | 8.3 | 10433 | G | 2.8 | |
| 11 | K | 11.5 | 1.08 | 10.17 | 1241 | 1145 | 9.5 | 11790 | G | 3.1 | |
| 12 | L | 12.8 | 1.47 | 10.57 | 1235 | 1120 | 9.7 | 11980 | G | 2.8 | |
| 13 | M | 11.7 | 1.26 | 9.65 | 1256 | 1156 | 8.7 | 10927 | G | 2.9 | |
| 14 | N | 11.5 | 2.20 | 9.64 | 1067 | 933 | 13.2 | 14084 | EX | 3.1 | |
| 15 | O | 11.4 | 2.56 | 8.84 | 1081 | 956 | 10.8 | 11675 | EX | 2.8 | |
| 16 | P | 10.8 | 3.11 | 9.43 | 1127 | 1004 | 13.8 | 15553 | EX | 2.8 | |
| 17 | Q | 11.5 | 2.13 | 10.07 | 1008 | 920 | 12.8 | 12902 | EX | 2.9 | |
| 18 | R | 12.4 | 2.56 | 9.92 | 1120 | 980 | 11.0 | 12320 | EX | 2.9 | |
| 19 | S | 11.5 | 2.53 | 9.17 | 1005 | 950 | 12.4 | 12462 | EX | 3.2 | |
| 20 | T | 12.0 | 2.03 | 10.33 | 1058 | 870 | 13.9 | 14706 | EX | 3.0 | |
| 21 | U | 11.9 | 3.13 | 9.34 | 1154 | 956 | 11.8 | 13617 | EX | 2.9 | |
| 22 | V | 11.5 | 3.28 | 8.59 | 1059 | 945 | 10.5 | 11120 | EX | 2.5 | |
| 23 | W | 12.3 | 0.86 | 10.18 | 1003 | 916 | 13.1 | 13139 | NA | 3.1 | Comparative example |
| 24 | X | 11.8 | 0.94 | 9.77 | 1050 | 899 | 12.2 | 12810 | NA | 3.0 | |
| 25 | Y | 10.4 | 0.95 | 8.68 | 1018 | 740 | 14.5 | 14761 | NA | 2.7 | |
| 26 | Z | 11.5 | 0.89 | 9.49 | 1210 | 1087 | 9.0 | 10890 | NA | 3.0 | |
| 27 | AA | 12.1 | 0.92 | 9.47 | 1270 | 1099 | 10.1 | 12827 | NA | 2.9 | |
| 28 | AB | 12.9 | 0.97 | 9.58 | 1255 | 1040 | 9.8 | 12299 | NA | 3.1 | |
| 29 | AC | 12.7 | 0.94 | 8.92 | 1231 | 1054 | 10.9 | 13418 | NA | 3.0 | |
| 30 | AD | 12.2 | 1.52 | 8.34 | 1221 | 1085 | 9.7 | 11844 | G | 2.3 | |
| 31 | AE | 12.4 | 1.61 | 8.42 | 1225 | 1087 | 10.4 | 12740 | G | 2.2 | |
| 32 | AF | 12.2 | 1.40 | 8.43 | 1237 | 1085 | 10.0 | 12370 | G | 2.4 | |
| 33 | AG | 11.1 | 1.10 | 8.19 | 1260 | 1112 | 8.7 | 10962 | G | 2.1 | |
| 34 | AH | 11.6 | 2.60 | 8.05 | 1020 | 940 | 13.0 | 13260 | EX | 2.2 | |
| 35 | AI | 11.0 | 1.64 | 8.40 | 1010 | 922 | 12.5 | 12625 | EX | 2.4 | |
| 36 | AJ | 12.0 | 1.92 | 7.77 | 1024 | 870 | 12.4 | 12698 | EX | 2.1 | |
| 37 | AK | 11.6 | 1.04 | 9.37 | 1240 | 1100 | 11.0 | 13640 | EX | 2.3 | |
| 38 | AL | 12.5 | 1.20 | 9.54 | 1212 | 1022 | 10.5 | 12726 | EX | 2.0 | |
| 39 | AM | 12.1 | 1.03 | 9.91 | 1255 | 1140 | 11.1 | 13931 | EX | 2.1 | |
| 40 | AN | 11.5 | 2.77 | 9.69 | 1026 | 952 | 13.0 | 13338 | EX | 2.2 | |
| 41 | AO | 12.5 | 2.30 | 8.79 | 1099 | 991 | 13.5 | 14837 | EX | 2.3 | |
| 42 | AP | 12.0 | 3.01 | 9.49 | 1140 | 1001 | 12.8 | 14592 | EX | 2.1 | |
| 43 | AQ | 12.5 | 0.99 | 10.51 | 1317 | 1218 | 7.6 | 10009 | NA | 2.7 | |
| 44 | AR | 12.1 | 1.04 | 9.94 | 1292 | 1215 | 7.8 | 10078 | NA | 3.1 | |

As shown in Table 3, Test Nos. 1 to 22, which satisfied all of the specifications of the present invention, had high tensile strength and excellent workability of diameter reduction and, in addition, resulted in excellent hydrogen embrittlement resistance properties. In contrast to these, Test Nos. 23 to 44, which are comparative examples not satisfying the specifications of the present invention, resulted in degradation in workability of diameter reduction or hydrogen embrittlement resistance properties.

INDUSTRIAL APPLICABILITY

According to the present invention, a seamless steel pipe that has high strength and excellent workability of diameter reduction and further has excellent hydrogen embrittlement resistance properties can be provided. Accordingly, the seamless steel pipe according to the present invention is suitable for the raw material of an inflator bottle for an airbag.

Claims

1. A seamless steel pipe having a chemical composition consisting of, in mass%:

C: 0.05 to 0.20%,
Si: 0.05 to 0.50%,
Mn: 0.30 to 1.50%,
P: 0.025% or less,
S: 0.020% or less,
Cu: 0.01 to 0.50%,
Ni: 0.01 to 0.50%,
Cr: 0.01 to 1.20%,
Mo: 0.01 to 0.50%,
Ti: 0.001 to 0.050%,
Nb: 0.001 to 0.100%,
Ca: 0.0005 to 0.0025%,
Al: 0.080% or less,
N: 0.0100% or less,
V: 0 to 0.100%,
B: 0 to 0.0050%,
Mg: 0 to 0.0050%,
REM: 0 to 0.0050%,
Sn: 0 to 0.100%, and
As: 0 to 0.010%,
with the balance: Fe and impurities, wherein
on a precondition that contents fall within respective ranges described above,
the chemical composition satisfies Formula (i) shown below in conjunction with a wall thickness of the seamless steel pipe and
the chemical composition further satisfies Formula (ii) shown below in conjunction with a prior-austenite grain size number of the seamless steel pipe, and wherein
a tensile strength of the seamless steel pipe is 1000 MPa or more,
an elongation after fracture of the seamless steel pipe is 8.0% or more, and
a critical hydrogen concentration of the seamless steel pipe is 2.5 ppm or more:

$$WT / (5C + Mo + Cr) \geq 1.00 \quad \cdots(i)$$

$$GN - 1.51 \times (Mn + 85P - 30Ca) \geq 8.50 \quad \cdots(ii)$$

where symbols of elements in the formula mean contents (mass%) of the elements in the steel, and when an element is not contained, zero will be set to the corresponding symbol, and where WT means the wall thickness (mm) of the seamless steel pipe and GN means the prior-austenite grain size number of the seamless steel pipe.

2. The seamless steel pipe according to claim 1, wherein the chemical composition contains one or more elements selected from, in mass%:

V: 0.001 to 0.100%,
B: 0.0001 to 0.0050%,
Mg: 0.0001 to 0.0100%,
REM: 0.0001 to 0.0100%,
Sn: 0.001 to 0.100%, and
As: 0.001 to 0.010%.

3. An inflator bottle for an airbag including a cylindrical portion extending in one direction and a diameter-reduced portion formed on at least one end of the cylindrical portion in the one direction, wherein
a chemical composition of the cylindrical portion consists of, in mass%:

C: 0.05 to 0.20%,
Si: 0.05 to 0.50%,
Mn: 0.30 to 1.50%,
P: 0.025% or less,
S: 0.020% or less,

Cu: 0.01 to 0.50%,
Ni: 0.01 to 0.50%,
Cr: 0.01 to 1.20%,
Mo: 0.01 to 0.50%,
Ti: 0.001 to 0.050%,
Nb: 0.001 to 0.100%,
Ca: 0.0005 to 0.0025%,
Al: 0.080% or less,
N: 0.0100% or less,
V: 0 to 0.100%,
B: 0 to 0.0050%,
Mg: 0 to 0.0050%,
REM: 0 to 0.0050%,
Sn: 0 to 0.100%, and
As: 0 to 0.010%,
with the balance: Fe and impurities, wherein
on a precondition that contents fall within respective ranges described above,
the chemical composition of the cylindrical portion satisfies Formula (i) shown below in conjunction with a wall thickness of the cylindrical portion and
the chemical composition of the cylindrical portion further satisfies Formula (ii) shown below in conjunction with a prior-austenite grain size number of the cylindrical portion, and wherein
a tensile strength of the cylindrical portion is 1000 MPa or more,
an elongation after fracture of the cylindrical portion is 8.0% or more, and
a critical hydrogen concentration of the cylindrical portion is 2.5 ppm or more:

$$WT / (5C + Mo + Cr) \geq 1.00 \quad \cdots(i)$$

$$GN - 1.51 \times (Mn + 85P - 30Ca) \geq 8.50 \quad \cdots(ii)$$

where symbols of elements in the formula mean contents (mass%) of the elements in the steel of the cylindrical portion, and when an element is not contained, zero will be set to the corresponding symbol, and where WT means the wall thickness (mm) of the cylindrical portion and GN means the prior-austenite grain size number of the cylindrical portion.

4.  The inflator bottle for an airbag according to claim 3, wherein the chemical composition of the cylindrical portion contains one or more clements selected from, in mass%:

V: 0.001 to 0.100%,
B: 0.0001 to 0.0050%,
Mg: 0.0001 to 0.0100%,
REM: 0.0001 to 0.0100%,
Sn: 0.001 to 0.100%, and
As: 0.001 to 0.010%.

FIGURE 1

Holding portion 45 | Reduced width portion 30 | Holding portion 45

120

φ5.0 R5.0 2.0

2.0

7.0 C0.3 C0.3

9.0

4.5

(Unit: mm)

U notch

0.20

2.0 0.35

R0.10

Section of holding portion

0.30

0.30

9.0

9.0

Wall thickness d

## INTERNATIONAL SEARCH REPORT

| International application No. |
| --- |
| **PCT/JP2024/005810** |

### A. CLASSIFICATION OF SUBJECT MATTER

*C22C 38/00*(2006.01)i; *B60R 21/268*(2011.01)i; *C21D 8/10*(2006.01)i; *C21D 9/08*(2006.01)i; *C22C 38/54*(2006.01)i
FI:    C22C38/00 301Z; C22C38/54; B60R21/268; C21D8/10 C; C21D9/08 E

According to International Patent Classification (IPC) or to both national classification and IPC

### B. FIELDS SEARCHED

Minimum documentation searched (classification system followed by classification symbols)

C22C38/00; B60R21/268; C21D8/10; C21D9/08; C22C38/54

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2011/151908 A1 (SUMITOMO METAL INDUSTRIES, LTD.) 08 December 2011 (2011-12-08) | 1-4 |
| A | WO 2004/104255 A1 (SUMITOMO METAL INDUSTRIES, LTD.) 02 December 2004 (2004-12-02) | 1-4 |
| A | WO 2013/094116 A1 (NIPPON STEEL & SUMITOMO METAL CORPORATION) 27 June 2013 (2013-06-27) | 1-4 |

☐ Further documents are listed in the continuation of Box C.      ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **22 April 2024** | **07 May 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/005810**

| Patent document cited in search report | | | Publication date (day/month/year) | Patent family member(s) | | | Publication date (day/month/year) |
|---|---|---|---|---|---|---|---|
| WO | 2011/151908 | A1 | 08 December 2011 | US | 2012/0205016 | A1 | |
| | | | | EP | 2484793 | A1 | |
| | | | | KR | 10-2012-0056890 | A | |
| | | | | CN | 102741438 | A | |
| WO | 2004/104255 | A1 | 02 December 2004 | US | 2006/0130945 | A1 | |
| | | | | EP | 1637619 | A1 | |
| | | | | KR | 10-2006-0012310 | A | |
| | | | | CN | 1791694 | A | |
| WO | 2013/094116 | A1 | 27 June 2013 | US | 2014/0311632 | A1 | |
| | | | | EP | 2796572 | A1 | |
| | | | | CN | 104011233 | A | |
| | | | | KR | 10-2014-0092353 | A | |

Form PCT/ISA/210 (patent family annex) (July 2022)

**EP 4 678 775 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004027303 A
- JP 2004076034 A